(19) Europäisches Patentamt
European Patent Office
Office européen des brevets

(11) EP 0 430 264 B1

# (12) EUROPEAN PATENT SPECIFICATION

(45) Date of publication and mention of the grant of the patent:
**21.01.1998 Bulletin 1998/04**

(51) Int Cl.$^6$: **G06F 15/80**

(21) Application number: **90122896.5**

(22) Date of filing: **29.11.1990**

## (54) Neuro-computer

Neurorechner

Ordinateur neuronal

(84) Designated Contracting States:
**DE FR GB**

(30) Priority: **29.11.1989 JP 310458/89**

(43) Date of publication of application:
**05.06.1991 Bulletin 1991/23**

(73) Proprietor: **SHARP KABUSHIKI KAISHA**
**Osaka 545 (JP)**

(72) Inventor: **Funahashi, Kenichi**
**Kitayama-cho, Toyohashi-shi, Aichi-ken (JP)**

(74) Representative: **Müller, Frithjof E., Dipl.-Ing.**
**Patentanwälte**
**MÜLLER & HOFFMANN,**
**Innere Wiener Strasse 17**
**81667 München (DE)**

(56) References cited:
**GB-A- 2 152 715** **GB-A- 2 206 428**

- **Journal of parallel and distributed computing, vol. 6, no. 2, April 1989, DULUTH, MN US pages 291-330; GHOSH: 'MAPPING NEURAL NETWORKS ONTO MESSAGE PASSING MULTICOMPUTERS'**
- **IECON 89 VOL. 1, 6 NOVEMBER 1989, PHILADELPHIA, USA, PAGES 764-769; MASCIA: 'NEURAL NET IMPLEMENTATION ON SINGLE CHIP DIGITAL SIGNAL PROCESSOR'**
- **MICROPROCESSING AND MICROPROGRAMMING, VOL. 22, NO. 5, DECEMBER 1988, AMSTERDAM NL, PAGES 333-346; RIBARIC: 'PARALLEL CHARACTER RECOGNITION SYSTEM : THEORY, SIMULATION AND SYNTHESIS'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

BACKGROUND OF THE INVENTION

1. Field of the Invention

The present invention relates to a neuro-computer in which a mathematical model of the nerve cells of a brain is used.

2. Description of the Related Art

In general, neuro-computers are formed by mathematically modeling the nerve cells of a brain. Each of the nerve cells of a brain is a single cell entirely surrounded by a continuous cell membrane. A nerve cell is composed of a section of the main body called a cell body, a section called a dendrite made up of a large number of projections projecting in a tree-like form from the main body, and a section made up of one long fiber called an axon. Each section has its own information processing function. The dendrite receives the input signal, the cell body processes the input signal, and the axon outputs the output signal.

The axons spread into many branches at midway, and each of terminals thereof are connected to the dendrites (or to the surface of the cell body) of the other nerve cells, and these connected portions are called synapses. That is, the output information of one cell body is transmitted to the other cell bodies via the synapses.

The cell body is enclosed by a cell membrane, and an inside of the cell body is capable of having an electrical potential which differs from that of the outside, and usually the electrical potential of the inside of the cell body is lower than that of the outside.

In particular, at a time when the electrical potential of the outside of the cell body is set to be zero, the electrical potential of the inside of a cell body is called the film potential, and at a time when there is no input signal to the cell body the film potential is called the static film potential.

When an input signal is input to the cell body, the film potential varies, and the film potential becomes higher than the static film potential. When the film potential exceeds a predetermined threshold value, the cell body becomes active and the film potential rises sharply, and thereafter the film potential drops rapidly and returns its original potential value. This is called an impulse of the cell body. As the result of the impulse, an electrical pulse is generated from the cell body, and the generated electrical pulse is transmitted through an axon to a synapse which is a connection point with the other cell bodies.

A conventional neuro-computer has problems in that a large amount of storage capacity is required because all the values of a sigmoid function corresponding to the individual input values are stored in memory as a function table, and a neural net LSI (Large-Scale Integrated circuits) known as a neural chip which has a small amount of storage capacity cannot be used, and as a consequence a sigmoid function cannot be calculated with high accuracy.

JOURNAL OF PARALLEL AND DISTRIBUTED COMPUTING, vol. 6, no. 2, April 1989, Duluth, Mn US, pages 291-330; GHOSH: 'Mapping Neural Networks onto message passing multicomputers' discloses modelling of connectivity patterns in large neural networks. A distributed memory organisation is developed for simulating asynchronous, value-passing connectionist models. The volume of messages that need to be exchanged among physical processors are estimated for simulating the physical connections of a NN. The transfer function is implemented by a lookup-table. The internal state of a cell is also implemented using a lookup-table.

SUMMARY OF THE INVENTION

It is therefore an object of the present invention to provide a neuro-computer which is capable of calculating the value of a sigmoid function for each of input values with high accuracy by using a neural chip having a small amount of storage capacity.

An object of the present invention can be achieved by a neuro-computer adapted to be connected with both an input device and a general computer, which is capable of calculating values of an output function for each of input values with a limited storage capacity as set out in claim 1.

Preferably, the storage unit is adapted to use the general computer for calculating the values of the output function so that the calculated values of the second output function are stored in the storage unit in a form of a function table.

Further preferably, the first output function is a sigmoid function ø(s) with the ø(s) being represented in a form of

$$\varnothing(s) = \varnothing(\sum_{i=1} w_i x_i - \theta) = 1/(1+e^{-s})$$

with $x_i$ representing the input values and $w_i$ representing weights which represents an amount of connection efficiency of a synapse corresponding to each of the input values $x_i$, and n is the dimension of input vector.

More preferably, the second output function is a sigmoid function ø (|x|) which is represented in the second order Taylor expansion form of

$$\varnothing(|x|) \approx \varnothing(\bar{x}) + \Delta \cdot \varnothing(\bar{x}) \cdot [1-\varnothing(\bar{x})] + \frac{\Delta^2}{2!}\varnothing(\bar{x}) \cdot [1-\varnothing(\bar{x})] \cdot [1-2\varnothing(\bar{x})].$$

with $\bar{x} = (A/N)n$ which is equivalent to the input value of one of the sigmoid functions in the function table stored in the storage unit, A representing a maximum value of the input value x, N representing the number of partition, and Δ representing by $\Delta = |x| - \bar{x}$.

The storage unit is preferably a memory having a sufficient capacity for storing the values of the second output function.

The quantization unit is preferably an arithmetic device which is capable of judging the input values being positive or negative, and which is adapted to transmitting the judged result to the computing unit.

The arithmetic device is capable of calculating absolute values of the input values, preferably.

The computing unit is preferably a microprocessor which is adapted to calculate the values of the output function by using a difference between the second input values and the first input values with referring to the function table stored in the storage unit.

According to the present invention, a storage unit stores a first output function value corresponding to a first input value. A quantization unit quantizes a second input value and calculates the difference between the second input value and the first input value. A computing unit receives the difference between the second input value and the first input value from the quantization unit which receives the first output function value stored in the storage unit from the storage unit, and computes the second output function value corresponding to the second input value in accordance with the calculated difference and the first output function value.

According to the neuro-computer of the present invention, the neuro-computer is equipped with a computing unit for computing the second output function value corresponding to the second input value on the basis of a difference in input values quantized by a quantization unit and the first output function value corresponding to the first input value, thereby a desired second output function value can be computed by using the limited number of the first output function values. As a result, a neural chip having a small amount of storage capacity becomes useful in memory.

Further objects and advantages of the present invention will be apparent from the following description, reference being had to the accompanying drawings wherein preferred embodiments of the present invention are clearly shown.

## BRIEF DESCRIPTION OF THE DRAWINGS

Fig. 1 shows an arrangement of the neuro-computer according to the embodiment of the present invention;

Fig. 2 is a flowchart showing a sigmoid function computation process according to an embodiment of a neuro-computer of the present invention;

Fig. 3 schematically shows a mathematical model in a neural network which can be used in the neuro-computer of the present invention;

Fig. 4 shows an output profile of a sigmoid function;

Fig. 5 is a view partially explaining the sigmoid function of Fig. 4.

## DESCRIPTION OF THE PREFERRED EMBODIMENT

The embodiment of the present invention will be explained in detail hereinunder with reference to the accompanying drawings.

The arrangement of the neuro-computer according to this embodiment is shown in Fig. 1.

The flow of each of the steps for calculating a sigmoid function in the neuro-computer of Fig. 1 is shown in the flowchart of Fig. 2.

An input device 1 and a general computer 2 are connected with a neuro-computer 3 which is composed of a memory 4 connected to the general computer 2 serving as a storage unit, an arithmetic device 5 connected to the input device 1 serving as a quantization unit, and a microprocessor 6 connected to both the arithmetic device 5 and the memory 4 serving as a computation unit.

As a mathematical model for the neuron cells of a brain, a mathematical model called a McCulloch-Pitts type formal neuron (or a threshold element) is known.

Fig. 3 shows a McCulloch-Pitts type neuron. A neuro-computer which uses this neuron is formed of an information processing element with multiple inputs - one output. When n inputs of input signals to a unit are denoted as

$$\{x_i\}_{i=1}^{n} = \{x_1,\ x_2,\ \cdots\cdots,\ x_n\},$$

a weight (load) representing the amount of connection efficiency of a synapse corresponding to each of the n inputs is denoted as

$$\{w_i\}_{i=1}^{n} = \{w_1,\ w_2,\ \cdots\cdots,\ w_n\},$$

and denoting a threshold value as θ, then the output (signal) value y from the unit can be expressed as

$$y = \varnothing(s) = \varnothing\left(\sum_{i=1}^{n} w_i x_i - \theta\right)$$

where

$$s = \left(\sum_{i=1}^{n} w_i x_i - \theta\right),$$

and ø(s) is the output function of the unit. Regarding with a formal neuron, the sigmoid function $1/(1+e^{-s})$ is often used for the output function ø(s), as shown in Fig. 4. The calculation process of the sigmoid function is shown in Fig. 2. The calculation of the sigmoid function ø(s) starts with determining a use purpose of the neuro-computer 3 (step S1).

Upon the purpose of the neuro-computer 3 is determined, the next step is to determine an accuracy Ep of the sigmoid function ø(s) which indicates an allowable error range in the sigmoid function in order to determine the purpose of the neuro-computer 3 by the input device 1 (step S2).

When the accuracy $E_P$ is determined, then the next step is to determine a maximum value A of the input values x in the range in order to determine the range that the input value x of the sigmoid function ø(s) can take on the basis of the accuracy $E_P$ (step S3).

Here, the maximum value A can be determined from the following relational equation:

$$E_P \geq [1 - \varnothing(A_P)] = 1 - \frac{1}{1 + e^{-A_P}}$$

that is,

$$A_P \geq \log_e - \frac{1 + E_P}{E_P}$$

$$A \geq A_P$$

and the maximum value A is an integer.

When the maximum value A is determined, then the next step is to determine the number of the partition N in order to evenly divide the input values x (step S4). The number of partition N is determined by the following equation:

$$E_P \geq \frac{1}{24}\left(\frac{A}{N_P}\right)^3$$

That is,

$$N_P \geq (24E_P)^{1/3} \cdot A$$

$N \geq N_P$, and the number of partition N is an integer. Upon the determination of the maximum value A and the number of partition N by the above-mentioned method, both the values A and N are input from the input device 1.

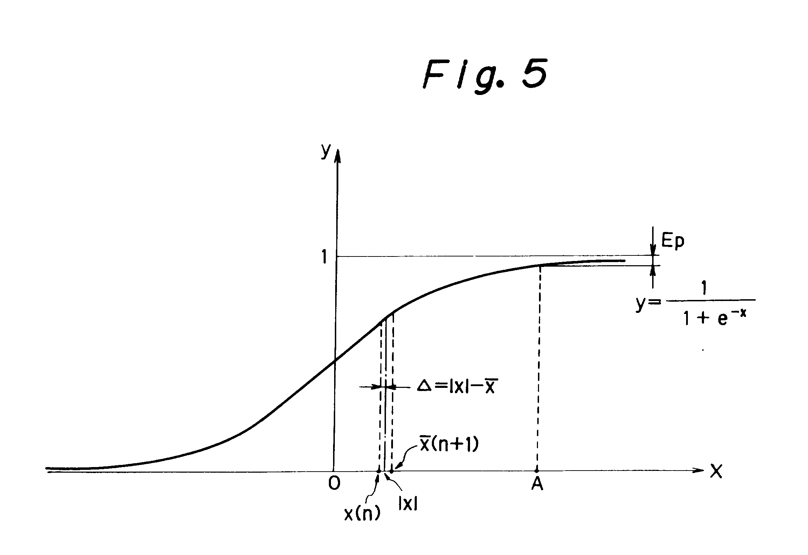

As shown in Fig. 5, a value A/N, which is obtained by dividing the maximum value A of the input values x by the number of partition N, becomes an interval value between respective divided input values x. The number of the sigmoid function

$$\left\{ \phi\left(\frac{A}{N} n\right) \right\}_{n=0}^{N}$$

is N+1 in all. Respective sigmoid functions

$$\left\{ \phi(0),\ \phi\left(\frac{A}{N}\right),\ \phi\left(\frac{A}{N}2\right),\ \cdots\cdots,\ \phi(A) \right\}$$

are calculated by means of the general computer 2 which is disposed on the outside and connected therewith (step S5). Each of the calculated sigmoid functions is stored in the memory 4 of the neuro-computer 3 from the general computer 2 as a function table (step S6). Furthermore, the input device 1 transmits the input value x to the arithmetic device 5 of the neuro-computer 3 (step S7).

The arithmetic device 5 judges the input value x has the plus or minus sign, and transmits the judged result to the microprocessor 6, and computes the absolute value of the input value x (step S8).

The next step is to determine the value n in accordance with the division interval of the evenly divided A, of which the absolute value |x| belongs to, by the computing unit 5, from the relational equation of

$$\frac{A}{N} n \leq |x| < \frac{A}{N}(n+1)$$

where n=0, 1, 2, ······, N-1(step S9).

For example, when the absolute value |x| belongs to a division interval between

$$\frac{A}{N} 2 \text{ and } \frac{A}{N} 3, \text{ then } n = 2.$$

When the value of n is determined, $\bar{x}$ is determined from

$$\bar{x} = \frac{A}{N} n \text{ (step S10).}$$

As is apparent from the above relational equation, $\bar{x}$ is equivalent to the input value of one sigmoid function in the function table stored in the memory 4.

After that, the difference Δ between the absolute value |x| and the computed value $\bar{x}$ is determined from the following equation: $\Delta = |x| - \bar{x}$ (step S11).

The process of computing a sigmoid function ø(x) for any input value x by the microprocessor 6, with using the results obtained at each stage as mentioned above, will be described in detail below.

A general equation f(x+a) is expressed by the Taylor expansion as

$$f(x+a) = f(x) + af'(x) + \frac{a^2}{2!} f''(x) + \frac{a^3}{3!} f'''(x + \theta a)$$

where $0 < \theta < 1$, then ø(|x|) can be expressed by the Taylor expansion as

$$ø(|x|) = ø(\bar{x} + \Delta) = ø(\bar{x}) + \Delta ø'(\bar{x}) + \frac{\Delta^2}{2!} ø''(\bar{x}) + \frac{\Delta^3}{3!} ø'''(\bar{x} + \theta\Delta).$$

Furthermore, in the above equation,

$$ø'(\bar{x}) = ø(\bar{x}) \cdot [1 - ø(\bar{x})]$$

$$ø''(\bar{x}) = \{ø(\bar{x}) \cdot [1 - ø(\bar{x})]\}' = ø(\bar{x}) \cdot [1 - ø(\bar{x})] \cdot [1 - 2ø(\bar{x})]$$

$$ø'''(\bar{x}) = ø(\bar{x}) \cdot [1 - ø(\bar{x})] \cdot [1 - 6ø(\bar{x})] + 6[ø(\bar{x})]^2\}.$$

An approximation can be made by using the Taylor expansion up to the second order as follows:

$$ø(|x|) \approx ø(\bar{x}) + \Delta \cdot ø(\bar{x}) \cdot [1-ø(\bar{x})] + \frac{\Delta^2}{2!} ø(\bar{x}) \cdot [1-ø(\bar{x})] \cdot [1-2ø(\bar{x})].$$

In the above equation, $ø(\bar{x})$ is a sigmoid function corresponding to the input value $\bar{x}$, which has already been stored in the memory 4 as one sigmoid function in the function table. Therefore, ø(|x|) can be computed easily by the microprocessor 6 with referring to the function table in the memory 4 and using the difference Δ in input values (step S12).

In the case where the second order Taylor expansion is used, an error $E_r$ is expressed as

$$E_r = \frac{\Delta^3}{3!} ø'''(\bar{x} + \theta\Delta) = \frac{\Delta^3}{3!} ø(\bar{x} + \theta\Delta) \cdot [1-ø(\bar{x} + \theta\Delta)] \cdot \{1-6ø(\bar{x} + \theta\Delta) + 6[ø(\bar{x} + \theta\Delta)^2\}.$$

An approximation can be made as

$$|E_r| \leq \frac{1}{24}\Delta^3$$

from

$$|\phi(\bar{x} + \theta\Delta)\,[1 - \phi(\bar{x} + \theta\Delta)]| \le 1/4$$

and

$$\left|\{1 - 6\phi(\bar{x} + \theta\Delta) + 6[\phi(\bar{x} + \theta\Delta)]^2\}\right| \le 1.$$

Furthermore, from the relational equation of

$$\Delta^3 \le \left(\frac{A}{N}\right)^3,$$

the following relation holds:

$$\frac{1}{24}\Delta^3 \le \frac{1}{24}\left(\frac{A}{N}\right)^3 = E_P.$$

Therefore, $|E_r| \le |E_P|$.

The error $E_r$ of the sigmoid function determined by an approximation calculation indicates a value smaller than the set error value $E_P$.

As in the following examples in the case where A = 10, N = $2^7$ = 128,

$$E_r \le \frac{1}{24}\left(\frac{10}{128}\right)^3 \approx 1.99 \times 10^{-5},$$

in the case where A = 10, N = $2^8$ = 256,

$$E_r \le \frac{1}{24}\left(\frac{10}{256}\right)^3 \approx 0.248 \times 10^{-5},$$

$E_r$ indicates a very small error value.

When the input value x is larger than the maximum value A, i.e., $x \ge A$, in a case that the maximum value A is taken to be a sufficiently large value, a sigmoid function ø (A) becomes

$$\lim_{A \to \infty} \phi\,(A) = \lim_{A \to \infty} (1/(1 + e^{-A})) \to 1$$

and approaches to a limit value 1. Therefore, an approximation can be made as ø (x) ≈ ø (A).

When the data, which indicates that the sign of the input value x is minus, is received from the arithmetic device 5, a desired sigmoid function ø (x) corresponding to the input value x can be computed by substituting a sigmoid function $\phi(\bar{x})$ computed by an approximation calculation for a relational equation $\phi(x) = 1 - \phi(\bar{x})$.

When the data, which indicates that the sign of the input value x is plus, is received from the arithmetic device 5, a desired sigmoid function ø (x) can be obtained by a relational equation $\phi(x) = \phi(\bar{x})$ from the computed sigmoid function $\phi(\bar{x})$ (step S13).

The computed sigmoid function ø (x) and the first-order derivative ø'(x) can be used in a supervised learning algorithm called a back propagation algorithm.

Many widely different embodiments of the present invention may be constructed without departing from the scope of the appended claims. It should be understood that the present invention is not limited to the specific embodiments described in this specification, except as defined in the appended claims.

**Claims**

1. A neuro-computer (3) adapted to be connected with both an input device (1) and a general computer (2), which is capable of calculating values of an output sigmoid function for each of input values with a limited storage capacity of a neural chip, said neuro-computer comprising:

   - means (4) connected to said general computer (2) for storing values of a first output function corresponding to first input values (|x|) from said input device (1), said storing means being adapted to use said general computer (2) for calculating said values of said first output function $\phi(\bar{x})$ so that said calculated values of said first output function are stored in said storage means in a form of a function table; where

$$s = \sum_{i=1}^{n} w_i x_i - \Theta,$$

   and Θ denotes a threshold value said neuro-computer being characterized by :

   - means (5) connected to said input device for quantizing second input values (|x|) received from said input device and for calculating a difference ($\Delta = |x| - \bar{x}$) between said values of the said second input and said values of the said first input; and
   - means (6) connected to both said storage means and said quantization means for computing values of a second output function ($\phi(|x|)$) corresponding to said second input values (|x|) on a basis of said calculated difference ($\Delta = |x| - \bar{x}$) between the said second input values and said first input values and on a basis of said first output function values ($\phi(\bar{x})$) stored in said function table created within said storage means, whereby

     -- said first output function is a sigmoid function ø(s) with the ø(s) being represented in a form of

$$ø(s) = ø\left(\sum_{i=1}^{n} wixi - \Theta\right) = 1/(1+e^{-s})$$

     with $x_i$ representing said input values and $w_i$ representing weights which represent an amount of connection efficiency of a synapse corresponding to each of said input values $x_i$, where n is the dimension of input vector x, and

     -- said second output function is a sigmoid function ø (|x|) which is represented in the second order Taylor expansion form of

$$ø(|x|) \approx ø(\bar{x}) + \Delta \cdot ø(\bar{x}) \cdot [1-ø(\bar{x})] + \frac{\Delta^2}{2!} ø(\bar{x}) \cdot [1-ø(\bar{x})] \cdot [1-2ø(\bar{x})]$$

     with $\bar{x} = (A/N)n$ equivalent to said input value of one of said first sigmoid functions in said function table stored in said storage means, with A representing a maximum value of said input value x, N representing a divisor, and $\Delta = |x| - \bar{x}$ |x| being the absolute value, $\bar{x}$ being the computed value.

2. The neuro-computer according to claim 1, wherein said storage means (4) is a memory having a sufficient capacity for storing said second output function values ($\phi(|x|)$).

3. The neuro-computer according to claim 1, wherein said quantization means (5) is an arithmetic device which is capable of judging said input values being positive or negative, and which is adapted to transmitting said judged result to said computing means (6).

4. The neuro-computer according to claim 3, wherein said quantization means (5) is capable of calculating absolute values (|x|) of said input values.

5. The neuro-computer according to claim 1, wherein said computing means (6) is a microprocessor which is adapted to calculate said second output function values by using a difference between said second input values and said first input values with referring to said function table stored in said storage means.

**Patentansprüche**

1. Neurorechner (3), der so ausgebildet ist, dass er sowohl mit einer Eingabevorrichtung (1) als auch mit einem Universalcomputer (2), der Werte einer Sigmoid- oder S-Ausgangsfunktion für jeden von Eingangswerten bei begrenzter Speicherkapazität eines Neuralchips berechnen kann, verbindbar ist, wobei dieser Neurorechner folgendes aufweist:

   - eine Einrichtung (4), die mit dem Universalcomputer (2) verbunden ist, um Werte einer ersten Ausgangsfunktion entsprechend ersten Eingangswerten (IxI) von der Eingabevorrichtung (1) einzuspeichern, wobei diese Speichereinrichtung so ausgebildet ist, dass sie den Universalcomputer (2) dazu verwendet, die Werte der ersten Ausgangsfunktion $\Phi(\bar{x})$ zu berechnen, damit diese berechneten Werte der ersten Ausgangsfunktion in Form einer Funktionstabelle in die Speichereinrichtung eingespeichert werden;
   - eine Einrichtung (5), die mit der Eingabevorrichtung verbunden ist, um von dieser Eingabevorrichtung empfangene zweite Eingangswerte (IxI) zu quantisieren und um eine Differenz ($\Delta = |x| - \bar{x}$) zwischen den Werten der zweiten Eingabe und den Werten der ersten Eingabe zu berechnen; und
   - wobei dieser Neurorechner durch folgendes gekennzeichnet ist:
   - eine Einrichtung (6), die sowohl mit der Speichereinrichtung als auch der Quantisierungseinrichtung verbunden ist, um Werte einer zweiten Ausgangsfunktion ($\Phi$(IxI), die den zweiten Eingangswerten (IxI) entsprechen, auf Grundlage der berechneten Differenz ($\Delta = |x| - \bar{x}$) zwischen den zweiten Eingangswerten und den ersten Eingangswerten und auf Grundlage der in der innerhalb der Speichereinrichtung geschaffenen Funktionstabelle abgespeicherten ersten Ausgangsfunktionswerte (($\Phi(\bar{x})$) zu berechnen; wobei

     -- die erste Ausgangsfunktion eine S-Funktion $\Phi(s)$ ist, wobei $\Phi(s)$ in der folgenden Form repräsentiert ist:

$$\Phi(s) = \Phi\left(\sum_{i=1}^{n} w_i x_i - \Theta\right) = 1/(1 + e^{-s})$$

wobei

$$S = \sum_{i=1}^{n} w_i x_i - \Theta$$

gilt und $\Theta$ einen Schwellenwert bezeichnet,
wobei $x_i$ die Eingangswerte repräsentiert und $w_i$ Gewichtungen repräsentiert, die das Ausmass des Verbindungswirkungsgrads einer jedem der Eingangswerte $x_i$ entsprechenden Synapse repräsentieren, wobei n die Dimension des Eingangsvektors x ist; und

     -- die zweite Ausgangsfunktion eine S-Funktion $\Phi$(IxI) ist, die durch eine Taylor-Expansion zweiter Ordnung wie folgt repräsentiert ist:

$$\varnothing(|x|) \approx \varnothing(\bar{x}) + \Delta \cdot \varnothing(\bar{x}) \cdot [1-\varnothing(\bar{x})] + \frac{\Delta^2}{2!} \varnothing(\bar{x}) \cdot [1-\varnothing(\bar{x})] \cdot [1-2\varnothing(\bar{x})],$$

mit $\bar{x} = (A/N)n$, entsprechend dem Eingangswert einer der ersten S-Funktionen in der in der Speichereinrichtung abgespeicherten Funktionstabelle, wobei A den Maximalwert des Eingangswerts x repräsentiert, N einen Teiler repräsentiert und $\Delta = |x| - \bar{x}$) gilt, wobei IxI der Absolutwert ist und $\bar{x}$ der berechnete Wert ist.

**2.** Neurorechner nach Anspruch 1, bei dem die Speichereinrichtung (4) ein Speicher mit ausreichender Kapazität zum Einspeichern der zweiten Ausgangsfunktionswerte (Φ (|x|)) ist.

**3.** Neurorechner nach Anspruch 1, bei dem die Quantisierungseinrichtung (5) eine arithmetische Vorrichtung ist, die beurteilen kann, ob die Eingangswerte positiv oder negativ sind und die so ausgebildet ist, dass sie das Beurteilungsergebnis an die Berechnungseinrichtung (6) überträgt.

**4.** Neurorechner nach Anspruch 3, bei dem die Quantisierungseinrichtung (5) Absolutwerte (|x|) der Eingangswerte berechnen kann.

**5.** Neurorechner nach Anspruch 1, bei dem die Berechnungseinrichtung (6) ein Mikroprozessor ist, der so ausgebildet ist, dass er die zweiten Ausgangsfunktionswerte unter Verwendung der Differenz zwischen den zweiten Eingangswerten und den ersten Eingangswerten unter Bezugnahme auf die in der zweiten Speichereinrichtung abgespeicherte Funktionstabelle berechnet.

**Revendications**

**1.** Ordinateur neuronal (3) conçu pour être connecté à la fois à un dispositif d'entrée (1) et à un ordinateur à usages multiples (2), capable de calculer des valeurs d'une fonction sigmoïde de sortie pour chaque valeur parmi des valeurs d'entrée avec une capacité de mémorisation limitée d'une puce neuronale, ledit ordinateur neuronal comprenant :

- un moyen (4) connecté audit ordinateur à usages multiples (2) pour mémoriser des valeurs d'une première fonction de sortie correspondant à des premières valeurs d'entrée (|x|) depuis ledit dispositif d'entrée (1), ledit moyen de mémorisation étant conçu pour utiliser ledit ordinateur à usages multiples (2) pour calculer lesdites valeurs de ladite première fonction de sortie $\varnothing(\bar{x})$ de sorte que lesdites valeurs calculées de ladite première fonction de sortie sont mémorisées dans ledit moyen de mémorisation sous la forme d'une table de fonctions ;

ledit ordinateur neuronal étant caractérisé par :

- un moyen (5) connecté audit dispositif d'entrée pour quantifier des secondes valeurs d'entrée (|x|) reçues depuis ledit dispositif d'entrée et pour calculer une différence ($\Delta = |x| - \bar{x}$) entre lesdites valeurs de ladite seconde entrée et lesdites valeurs de ladite première entrée ; et
- un moyen (6) connecté à la fois audit moyen de mémorisation et audit moyen de quantification pour calculer des valeurs d'une seconde fonction de sortie ($\varnothing$ (|x|)) correspondant auxdites secondes valeurs d'entrée (|x|) sur une base de ladite différence calculée ($\Delta = |x| - \bar{x}$) entre lesdites secondes valeurs d'entrée et lesdites premières valeurs d'entrée et sur une base desdites valeurs de première fonction de sortie ($\varnothing(\bar{x})$) mémorisées dans ladite table de fonctions créée à l'intérieur dudit moyen de mémorisation, ce par quoi
  - -- ladite première fonction de sortie est une fonction sigmoïde $\varnothing$ (s), le $\varnothing$ (s) étant représenté sous la forme de

$$\varnothing(s) = \varnothing\left(\sum_{i=1}^{n} w_i x_i - \Theta\right) = 1 / (1 + e^{-s})$$

où

$$s = \sum_{i=1}^{n} w_i x_i - \Theta,$$

et où $\Theta$ représente une valeur de seuil, avec $x_i$ représentant lesdits valeurs d'entrée et $w_i$ représentant des poids qui représentent une quantité d'efficacité de connexion d'une synapse correspondant à chacune desdites valeurs d'entrée $x_i$, où n est la dimension du vecteur d'entrée x, et
  - -- ladite seconde fonction de sortie est une fonction sigmoïde $\varnothing$ (|x|) qui est représentée sous la forme

d'expansion Taylor de second ordre de

$$\varnothing(|x|) \approx \varnothing(\bar{x}) + \Delta \cdot \varnothing(\bar{x}) \cdot [1-\varnothing(\bar{x})] + \frac{\Delta^2}{2!}\varnothing(\bar{x}) \cdot [1-\varnothing(\bar{x})] \cdot [1-2\varnothing(\bar{x})]$$

avec $\bar{x} = (A/N)\,n$ équivalent à ladite valeur d'entrée de l'une desdites premières fonctions sigmoïdes dans ladite table de fonctions mémorisée dans ledit moyen de mémorisation, A représentant une valeur maximale de ladite valeur d'entrée x, N représentant un diviseur et $\Delta = |x| - \bar{x}$, $|x|$ étant la valeur absolue, $\bar{x}$ étant la valeur calculée.

**2.** Ordinateur neuronal selon la revendication 1, dans lequel ledit moyen de mémorisation (4) est une mémoire ayant une capacité suffisante pour mémoriser lesdites valeurs de seconde fonction de sortie ($\varnothing(|x|)$).

**3.** Ordinateur neuronal selon la revendication 1, dans lequel ledit moyen de quantification (5) est un dispositif arithmétique qui est capable d'évaluer lesdites valeurs d'entrée comme étant positives ou négatives, et qui est conçu pour émettre ledit résultat évalué vers ledit moyen de calcul (6).

**4.** Ordinateur neuronal selon la revendication 3, dans lequel ledit moyen de quantification (5) est capable de calculer des valeurs absolues ($|x|$) desdites valeurs d'entrée.

**5.** Ordinateur neuronal selon la revendication 1, dans lequel ledit moyen de calcul (6) est un micro-ordinateur qui est conçu pour calculer lesdites valeurs de seconde fonction de sortie en utilisant une différence entre lesdites secondes valeurs d'entrée et lesdites premières valeurs d'entrée en se référant à ladite table de fonctions mémorisée dans ledit moyen de mémorisation.

Fig. 1

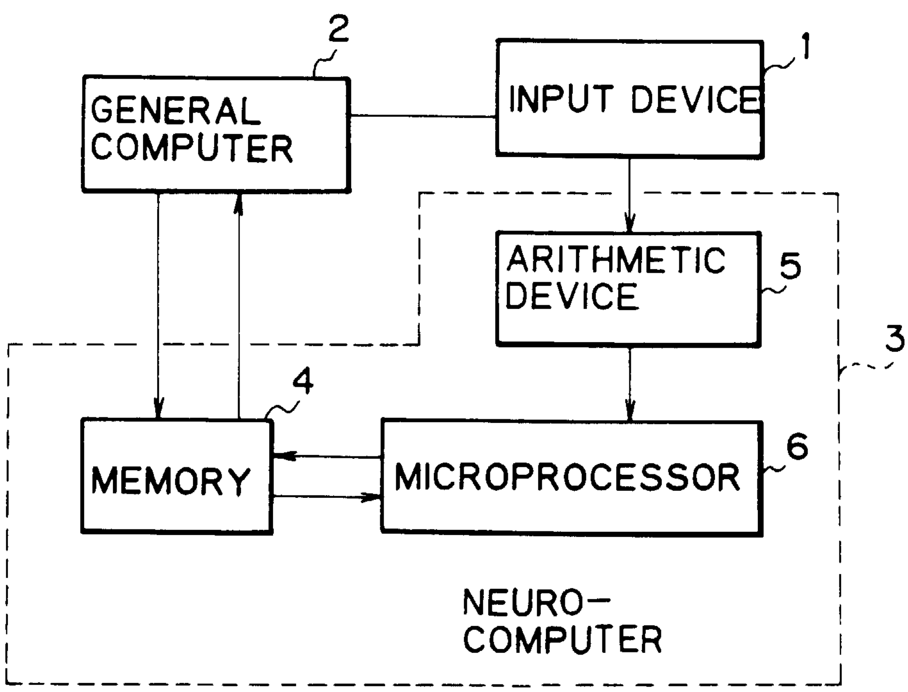
GENERAL COMPUTER
2
INPUT DEVICE
1
ARITHMETIC DEVICE
5
3
MEMORY
4
MICROPROCESSOR
6
NEURO-COMPUTER

Fig. 2

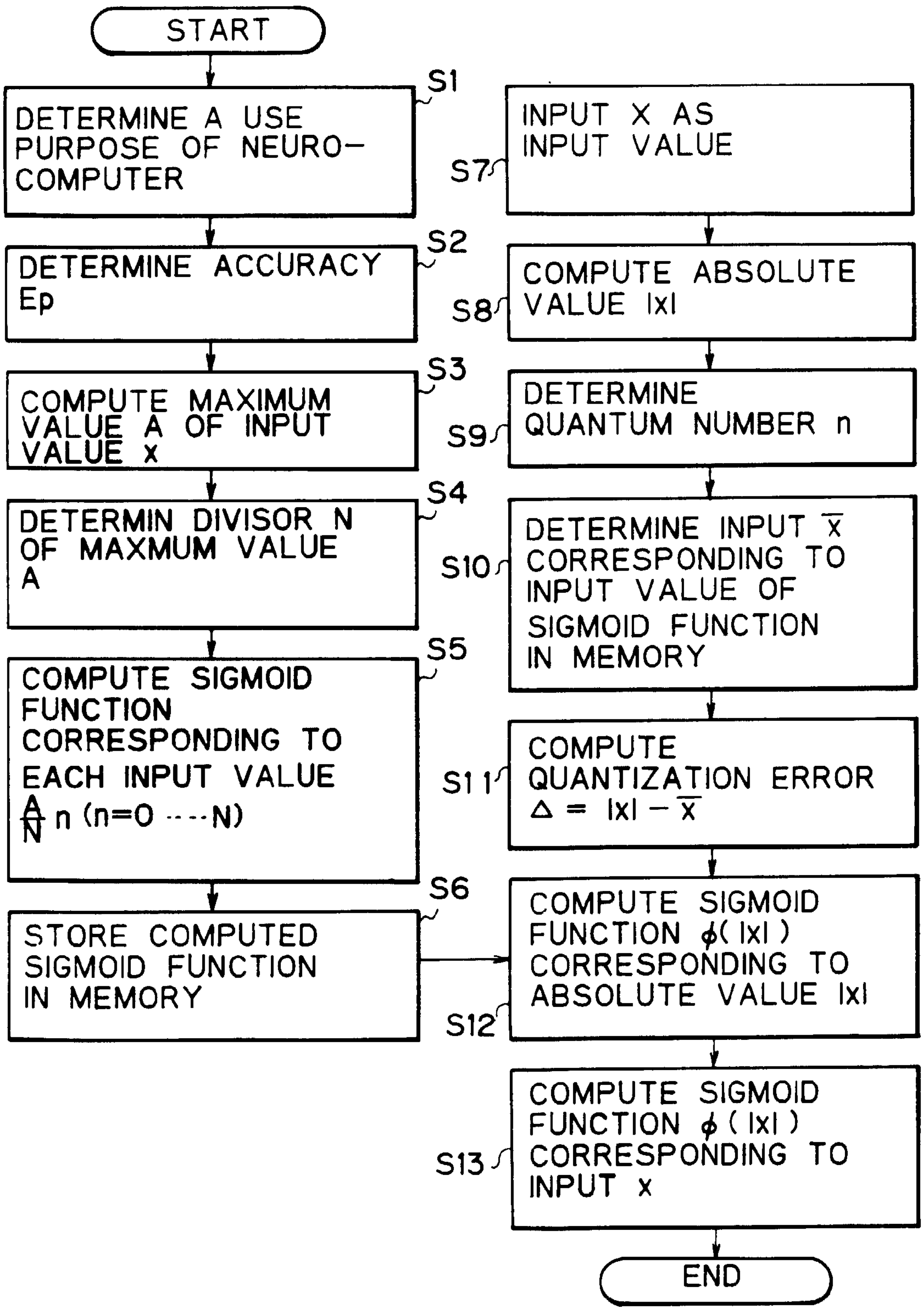
START
S1
DETERMINE A USE PURPOSE OF NEURO-COMPUTER
S2
DETERMINE ACCURACY Ep
S3
COMPUTE MAXIMUM VALUE A OF INPUT VALUE x
S4
DETERMIN DIVISOR N OF MAXMUM VALUE A
S5
COMPUTE SIGMOID FUNCTION CORRESPONDING TO EACH INPUT VALUE A/N n (n=0 ----N)
S6
STORE COMPUTED SIGMOID FUNCTION IN MEMORY
S7
INPUT X AS INPUT VALUE
S8
COMPUTE ABSOLUTE VALUE |x|
S9
DETERMINE QUANTUM NUMBER n
S10
DETERMINE INPUT x̄ CORRESPONDING TO INPUT VALUE OF SIGMOID FUNCTION IN MEMORY
S11
COMPUTE QUANTIZATION ERROR Δ = |x| − x̄
S12
COMPUTE SIGMOID FUNCTION ϕ( |x| ) CORRESPONDING TO ABSOLUTE VALUE |x|
S13
COMPUTE SIGMOID FUNCTION ϕ ( |x| ) CORRESPONDING TO INPUT x
END

Fig. 3

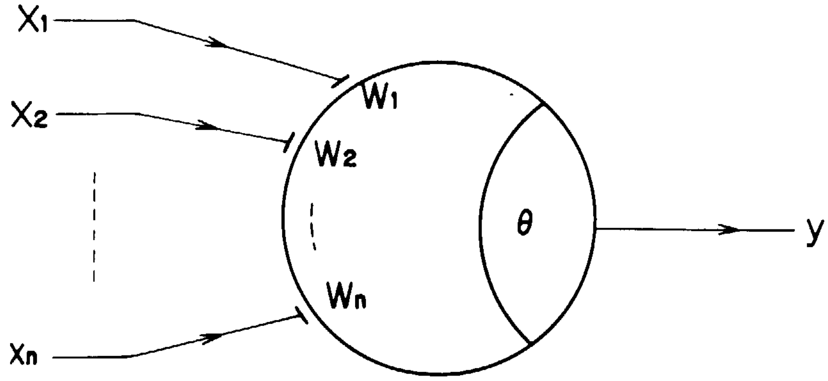


Fig. 4

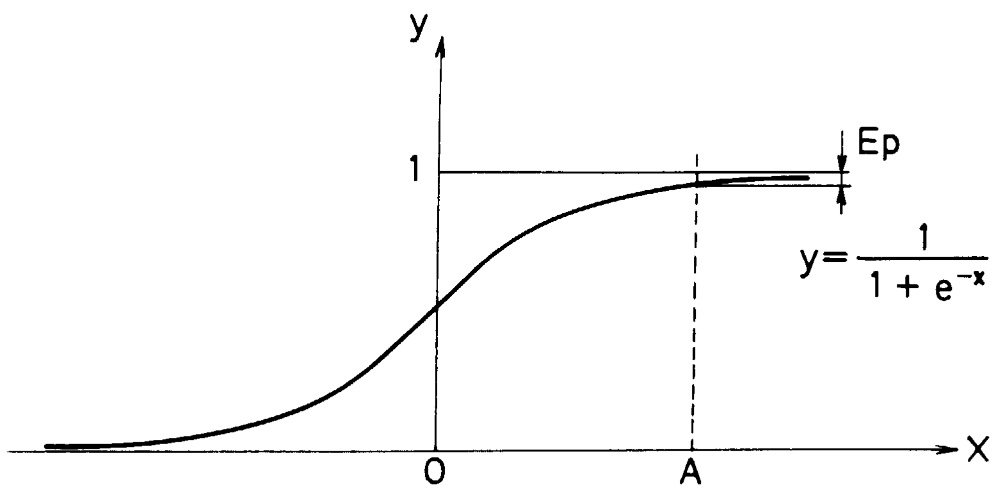

Fig. 5